# Europäisches Patentamt
# European Patent Office
# Office européen des brevets

(19)

(11) Veröffentlichungsnummer: **0 004 367**
**B1**

(12) ## EUROPÄISCHE PATENTSCHRIFT

(45) Veröffentlichungstag der Patentschrift:
25.11.81

(21) Anmeldenummer: **79100830.3**

(22) Anmeldetag: **19.03.79**

(51) Int. Cl.³: **G 01 D 7/00**, G 09 B 19/24,
B 23 K 37/00

(54) **Vorrichtung zur Darstellung des Einflusses von Schweissparametern auf den Strom-Spannungs-Arbeitspunkt beim Lichtbogenschweissen.**

(30) Priorität: **17.03.78 DE 2811737**

(43) Veröffentlichungstag der Anmeldung:
**03.10.79 Patentblatt 79/20**

(45) Bekanntmachung des Hinweises auf die Patenterteilung:
**25.11.81 Patentblatt 81/47**

(84) Benannte Vertragsstaaten:
**BE CH FR GB IT LU NL SE**

(56) Entgegenhaltungen:
**DE-A-2 500 182**
**FR-A-1 283 762**
**US-A-3 826 890**
**US-A-4 041 615**

(73) Patentinhaber: **Linde Aktiengesellschaft,
Abraham-Lincoln-Strasse 21, D-6200 Wiesbaden (DE)**

(72) Erfinder: **Hildebrandt, Peter, Birkenstrasse 9,
D-8051 Kranzberg (DE)**
Erfinder: **Dörhöfer, Friedrich, Am Krautgarten 3,
D-8919 Greifenberg (DE)**
Erfinder: **Haas, Burkhard, Wiesenweg 9, D-8044 Lohhof
(DE)**
Erfinder: **Hoth, Karl-Heinz, Falkenstrasse 3,
D-8044 Hollern (DE)**

(74) Vertreter: **Schaefer, Gerhard, Dr., Linde
Aktiengesellschaft Zentrale Patentabteilung,
D-8023 Höllriegelskreuth (DE)**

## Vorrichtung zur Darstellung des Einflusses von Schweißparametern auf den Strom-Spannungs-Arbeitspunkt beim Lichtbogenschweißen

Die Erfindung betrifft eine Vorrichtung zur Darstellung des Einflusses von Schweißparametern auf den Strom-Spannungs-Arbeitspunkt beim Lichbogenschweißen, wobei die Strom- und Spannungswerte auf eine als Koordinatensystem ausgebildete, analoge Großanzeige übertragbar und Strom- und Spannungswert in Abhängigkeit der gewählten Schweißparameter als Punkt im Koordinatensystem darstellbar und Meßvorrichtungen für die Werte der übrigen Schweißparameter vorgesehen sind.

Zur fehlerfreien Durchführung eines Schweißvorganges beim Lichtbogenschweißen sind exakte Schweißparameter, unter anderem Strom- und Spannungswerte erforderlich. Durch die Abstimmung dieser beiden Parameter erhält man den Arbeitspunkt. Mehrere Arbeitspunkte ergeben aneinandergereiht die Arbeitskennlinie, die die Mittellinie eines aus vielen anderen brauchbaren Arbeitspunkten begrenzten Lichtbogenkennlinienbereiches ist. Dieser Kennlinienbereich (Arbeitsbereich) verändert sich in Abhängigkeit der verschiedenen Schweißparameter.

Um alle Parameter, die den Lichtbogenschweißvorgang beeinflussen, beurteilen zu können, wurden bisher meist zahlreiche Tabellen bzw. Graphiken ausgewertet. Andererseits ist in der DE-B-1 165 294 eine Vorrichtung zum Bestimmen von Einstelldaten beim Lichtbogenschweißen mit hohen Stromdichten angegeben.

Durch diese Vorrichtung werden die zu einem Arbeitspunkt gehörenden Strom-Spannungs-Werte auf eine als Koordinatensystem ausgebildete analoge Großanzeige übertragen.

Mit dieser Vorrichtung kann aber nur der Arbeitspunkt in anschaulicher Weise ermittelt werden. Ein Nachteil dieser Vorrichtung ist, daß andere Schweißparameterwerte, beispielsweise der Kontaktrohrabstand, der Drahtvorschub oder die Kurzschlußfrequenz, nicht in übersichtlicher Form dargestellt und Zusammenhänge daher nur schwer zu erkennen sind.

Der Erfindung liegt daher die Aufgabe zugrunde, eine Vorrichtung zu entwickeln, mit der der Einfluß möglichst aller Schweißparameter auf den Strom-Spannung-Arbeitspunkt beim Lichtbogenschweißen in übersichtlicher Weise dargestellt und vom Beobachter rasch erfaßt werden kann.

Diese Aufgabe wird erfindungsgemäß dadurch gelöst, daß die Meßvorrichtungen mit digitalen Großanzeigen in Verbindung stehen und in der analogen Großanzeige in einen Sprühbogenbereich und einen Kurzlichtbogenbereich unterteilte Strom-Spannungs-Arbeitsbereiche auf Tafeln, Schaubildern oder durch Projektion auf die Großanzeige dargestellt sind.

Mit einer der Erfindung entsprechenden Vorrichtung kann nicht nur die Auswirkung einer Änderung eines Parameterwertes auf die Lage des Arbeitspunktes optisch erkannt, d. h. der Parametereinfluß qualitativ verstanden werden, vielmehr ist auch eine quantitative Erfassung möglich. So wird jeder Schweißparameter über eigene Meßvorrichtungen bestimmt und der aktuelle Wert des Parameters auf eine digitale Großanzeige übertragen und angezeigt. Synchron dazu wird der einer bestimmten Parameterkonstellation entsprechende Arbeitspunkt in der analogen Großanzeige angezeigt. In dieser Anzeige sind Strom-Spannungs-Arbeitsbereiche dargestellt, d. h. Bereiche innerhalb derer ein sicheres Schweißen möglich ist. Somit können Abweichungen aus dem Arbeitsbereich mit der möglichen Folge von Schweißnahtfehlern rasch erkannt und korrigiert werden.

Der Betrachter erkennt dadurch in objektiver Art, wie Änderungen von Schweißparametern, z. B. des Drahtvorschubes oder des Kontaktrohrabstandes, den Lichtbogen (erkennbar am dargestellten Arbeitspunkt) verändern, in welcher Richtung die Korrekturmaßnahmen getroffen werden müssen, um den Lichtbogen ins zum Schweißen geeignete Gebiet zurückzuführen, und um welche Absolutwerte die Parameter geändert worden sind.

Verschiedene Schutzgase bzw. Drahtelektrodendurchmesser bewirken auch unterschiedliche Arbeitsbereiche. Änderungen dieser Parameter werden erfindungsgemäß durch verschiedene Darstellungen der Arbeitsbereiche auf der analogen Großanzeige erfaßt. Sind die Arbeitsbereiche auf Tafeln oder Schaubildern dargestellt, so sind diese gegen Tafeln für die entsprechenden Parameter auszutauschen. Mit Vorteil können verschiedene Arbeitsbereiche bzw. das Koordinatensystem und die Arbeitsbereiche auch durch Projektion von entsprechenden Diapositiven auf einen Bildschirm abgebildet und die Diapositive automatisch ausgetauscht werden.

Gegenüber bisherigen Methoden und Vorrichtungen bietet die erfindungsgemäße Anlage einem Betrachter neben der großen Übersichtlichkeit die Möglichkeit, Zusammenhänge anschaulicher erfassen und schnell verstehen zu können. Aufgrund dieser Eigenschaften eignet sich die neue Vorrichtung in besonderer Weise für den Einsatz bei der Schulung von Schweißern. Auszubildende erkennen nicht nur in welche Richtung Schweißparameter zu verändern sind, sondern können auch in einfacher Weise die Größenordnung der Änderung mitverfolgen.

Dazu ist es zweckmäßig den Lichtbogen und Änderungen am Lichtbogen durch abweichende Parameterwerte auch direkt zu betrachten. Möglichkeiten hierfür sind die Beobachtung des Lichtbogens durch ein Filterglas oder über ein Videosystem.

Neben der Unterteilung des Koordinatenfeldes der analogen Großanzeige in Bereiche, die dem Betrachter Aufschluß geben, ob die eingestellten Paramter zu einem zu langen oder zu kurzen Lichtbogen führen, sind die Arbeitsbereiche mit Vorteil in einen Sprühlichtbogen- und einen Kurzlichtbogenbereich unterteilt.

Im folgenden soll ein Ausführungsbeispiel einer erfindungsgemäßen Vorrichtung anhand einer schematischen Skizze näher erläutert werden:

In einer Großanzeige 1 ist ein Strom-Spannungs-Koordinatensystem dargestellt, wobei der Strom auf der Abszisse und die Spannung auf der Ordinate abgetragen ist. Die beiden Parameterwerte erscheinen auf der Großanzeige als Analoggrößen. Ein zusammengehörendes Strom-Spannungs-Paar wird z. B. durch einen Lichtpunkt 2 als Arbeitspunkt auf der Großanzeige dargestellt. Der in den Sprühlichtbogenbereich 3 und den Kurzlichtbogenbereich 4 unterteilte Arbeitsbereich für ein bestimmtes Schutzgas und einen bestimmten Drahtelektrodendurchmesser ist in dem Koordinatenfeld optisch gegenüber den übrigen Strom-Spannungs-Kombinationen abgehoben. Nicht dargestellte Meßgeräte bestimmen den Wert jedes interessierenden Schweißparameters. Dieser Wert wird in digitalen Großanzeigen für die Spannung 5, den Strom 6, den Drahtvorschub 7, den Kontaktrohrabstand 8 und die Kurzschlußfrequenz 9 angezeigt. Der Lichtbogen eines ebenfalls nicht dargestellten Lichtbogen-Schweißbrenners kann über Filtergläser 10 direkt oder über ein Videosystem 11 indirekt beobachtet werden.

Ausgehend von bestimmten Parameterwerten, die vor dem Zünden des Lichtbogens gewählt und eingestellt worden sind, erscheint ein dem Arbeitspunkt entsprechender Lichtpunkt 2 auf der analogen Großanzeige 1. Gleichzeitig können die eingestellten Parameterwerte an den digitalen Großanzeigen 5 bis 9 abgelesen und der Lichtbogen z. B. über das Videosystem 11 beurteilt werden. Liegt der Arbeitspunkt, dargestellt durch den Lichtpunkt 2, außerhalb der gewünschten Arbeitsbereiche 3 und 4 wird dieser durch Korrektur von Schweißparametern in den Bereich des Kurzlichtbogens 4oder des Sprühlichtbogens 3 geführt. Die qualitative Auswirkung einer Korrektur kann aus der Richtung geschlossen werden, in die der Lichtpunkt 2 wandert. Die digitalen Großanzeigen 5 und 9 ermöglichen es festzustellen, um welchen Wert der Arbeitspunkt bei Änderungen eines Schweißparameters um einen bestimmten Betrag verschoben wird.

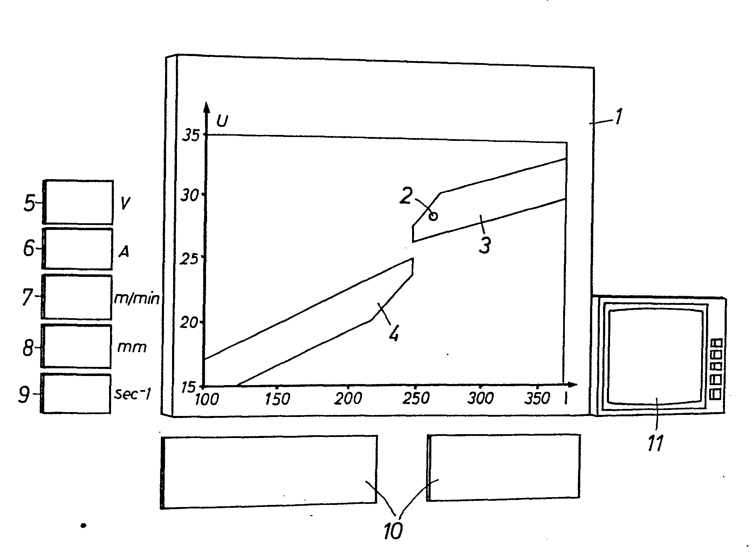

## Patentanspruch

Vorrichtung zur Darstellung des Einflusses von Schweißparametern auf den Strom-Spannungs-Arbeitspunkt beim Lichtbogenschweißen, wobei die Strom- und Spannungswerte auf eine als Koordinatensystem ausgebildete, analoge Großanzeige übertragbar und Strom- und Spannungswert in Abhängigkeit der gewählten Schweißparameter als Punkt im Koordinatensystem darstellbar und Meßvorrichtungen für die Werte der übrigen Schweißparameter vorgesehen sind, dadurch gekennzeichnet, daß die Meßvorrichtungen mit digitalen Großanzeigen (5—9) in Verbindung stehen und in der analogen Großanzeige (1) in einen Sprühbogenbereich (3) und einen Kurzlichtbogenbereich (4) unterteilte Strom-Spannungs-Arbeitsbereiche (3, 4) auf Tafeln, Schaubildern oder durch Projektion auf die Großanzeige dargestellt sind.

## Claim

Apparatus for representing the influence of welding parameters on the current-voltage working point during arc welding, wherein the current and voltage values are transferable to a large-scale analog indicator forming a co-ordinate system, the current and voltage values being represented as a point in the co-ordinate system in dependence upon the chosen welding parameter, and measuring devices being provided for the values of the remaining welding parameters, characterised in that the measuring devices are connected to large-scale digital indicators (5—9) and that the currentvoltage operating ranges (3, 4), wich are divided into a spray-arc range (3) and a short-arc range (4), are represented on the large-scale analog indicator (1), on charts, diagrams, or by projection of the large-scale indicator.

## Revendication

Dispositif pour représenter l'influence de paramètres de soudage sur le point de travail lors du soudage à l'arc, dans lequel les valeurs d'intensité et de tension sont susceptibles d'être transmises à des moyens d'affichage analogue à grande échelle, qui forment un système de coordonnées, et dans lequel les valeurs d'intensité et de tension sont susceptibles d'être représentées, en fonction des paramétres de soudage choisis, sous forme d'un point dans le système de coordonnées, cependant que des moyens de mesure sont prévus pour mesurer les valeurs des autres paramètres de soudage, caractérisé en ce que les moyens de mesure sont reliés à des moyens d'affichage numérique à grande échelle (5, 9) et en ce que les moyens d'affichage analogue à grande échelle (1) représentent sur des tableaux, graphiques ou par projection, des plages de travail »intensité-tension« (3, 4) subdivisées en une plage d'arc à couronne (3) et une plage d'arc court (4).